# EUROPEAN PATENT APPLICATION

(11) **EP 4 424 142 A1**
(43) Date of publication of application: **04.09.2024**
(21) Application number: 23159227.0
(22) Date of filing: 28.02.2023
(51) Int. Cl.: A01F 15/08, A01D 69/10

(54) **BALER WITH BRAKE WITH SEVERAL STOP POSITIONS DEPENDENT ON DIFFERENT SITUATIONS**

(71) Applicant: CNH Industrial Belgium N.V., 8210 Zedelgem (BE)
(72) Inventor: LOOSFELT, Yves, 8210 Zedelgem (BE); BONTE, Xavier, 8210 Zedelgem (BE); NAEYAERT, Karel, 8210 Zedelgem (BE); DERYNCK, Lynn, 8210 Zedelgem (BE); ROSSEEL, Bram, 8210 Zedelgem (BE)
(74) Representative: CNH Industrial IP Department

(57) **Abstract**

The present invention relates to an agricultural baler (2) comprising a shaft (14), a flywheel (16) connected to the shaft (14), a plunger (20) connected to the flywheel (16) via a crank (50), a brake system (60) adapted for providing a brake force for decelerating the flywheel (16) depending on a brake control signal (S), a sensor system (77) for providing first sensor data (T) indicative of presence of crop material in the baling chamber (6); and a brake control system (61) arranged for receiving the first sensor data (T), and connected to the brake system (60) for providing the brake control signal (S), the brake control system (61) comprising a control unit (80) provided with an algorithm for determining the brake control signal (S) for stopping the crank (50) in a either one of a plurality of predefined stop positions depending on the received first sensor data (T).

## Description

### Field of the invention

The present invention relates to the field of agricultural balers for producing bales by compressing agricultural crop material. More specifically, the present invention relates to braking of large towable square balers having a heavy flywheel for producing high-density bales.

### Background of the invention

The vast majority of balers does not have its own engine, but is towed by a tractor, and is powered by coupling the power take-off (PTO) shaft of the tractor to an input shaft of the baler. The baler further has a flywheel connected to the input shaft, and a gearbox that drives the various mechanisms in the baler to pick up the crop from a field, to form the crop into bales and to wrap twine and/or foil around the bales.

A one-way clutch is typically arranged between the PTO shaft and the flywheel to allow the flywheel to rotate faster than the PTO shaft. The baler input shaft can be operatively decoupled from the tractor PTO, e.g. for transportation of the baler from one field to the other.

A large and heavy flywheel is required in a baler, especially in so-called "large square balers" or "high density balers", to overcome peak loads encountered by the baler gearbox, which occurs e.g. when the plunger of the baler compresses the crop material in the baling chamber when forming the bales. By using a flywheel with a high inertia and running at a high speed (e.g. 1000 rpm), peak energy for the peak loads can be delivered by the flywheel, which slightly slows down during each compression, and which is accelerated again by the tractor PTO between two compressions. However, the high inertia of the flywheel creates a problem when starting the baler. The PTO shaft, when driven by the tractor engine at the speed at which it needs to turn to drive the baler during normal operation, may not be able to provide the high torque needed to bring the flywheel up to its steady speed (e.g. 1000 rpm). As a result, when the baler is hitched to the tractor and its flywheel is connected to the tractor PTO shaft, the tractor engine may stall or a safety mechanism may declutch the PTO from the tractor engine on account of the high load on the PTO shaft when the baler is started.

A solution to this problem proposed in EP1974601 is to use a hydraulic motor to supplement the torque provided by the PTO shaft when starting the baler flywheel. This solution is not entirely satisfactory because it requires a powerful hydraulic motor, with a power comparable to that of the tractor PTO.

Another solution to this problem is disclosed in WO2011/060995, where a tractor with a change speed gearbox is described, which allows the baler to start-up in two phases. In the first phase the flywheel is accelerated to a first speed using a first transmission ratio of the change speed gearbox, and in the second phase the flywheel is accelerated to a second speed using a second transmission ratio of the change speed gearbox. A disadvantage of this technique is that it requires a tractor with a change speed gearbox.

WO2014/128097 describes that, at start-up, some positions of the crank are more favorable than others in terms of exerted forces and hence in terms of torque to be provided. WO2014/128097 therefore proposes to use an auxiliary motor connectable to the flywheel for starting up rotation thereof; a start-up control system, comprising at least one sensor indicative for a position of the crank; and a control unit operably connected to the at least one sensor and adapted for controlling the auxiliary motor for rotating the flywheel in reverse direction to a predetermined launch position. By deliberately positioning the flywheel in a predefined launch position, at start-up, when being accelerated by a tractor PTO, the flywheel can gain more kinetic energy than is required for compressing the crop material present in the baling chamber. In other words, starting from the predetermined launch position enables the flywheel to "survive" the first plunger impact, and to continue rotating as a successful start-up.

When it is desirable to avoid such auxiliary motor, as described in WO2014/128100, the baler can be braked such that the crank is stopped in the predetermined launch position, which is a favourable position. It has been noted, however, that stopping the baler with the crank in such favourable position and keeping it there is feasible when a sufficient amount of crop is left compressed in the baling chamber. However, when switching off the baler in case the baling chamber is empty, the flywheel and crank tend to automatically rotate to an unfavorable condition because of the gravity force acting on the heavy crank. Such movement of the crank under gravity force induces an unintentional movement of the plunger for compressing the crop in the baling chamber, which may be frightening and even dangerous for people potentially present in the baling chamber to inspect, service or repair the machine.

### Summary of the invention

It is an object of embodiments of the present invention to provide a baler with a good, e.g. an improved, braking behavior.

The above objective is accomplished by a method and device in accordance with the present invention.

In a first aspect, the present invention provides an agricultural baler comprising:
- a shaft for coupling with a power take-off, and a flywheel connected to the shaft;
- a plunger connected to the flywheel via a crank, the plunger being adapted for performing a reciprocal movement between a near position allowing crop material to be added in a baling chamber, and a distal position suitable for compressing crop material in the baling chamber; and
- a brake system adapted for providing a brake force for decelerating the flywheel depending on a brake control signal.

The baler further comprises
- a sensor system comprising at least one sensor for providing first sensor data indicative of presence of crop material in the baling chamber; and
- a brake control system connected to the at least one sensor system for receiving the first sensor data, and connected to the brake system for providing the brake control signal, the brake control system comprising a control unit provided with an algorithm for determining the brake control signal for stopping the crank in a either one of a plurality of predefined stop positions depending on the received first sensor data.

It is an advantage of such balers according to embodiments of the present invention can avoid dangerous or undesirable situations in which the plunger unintentionally or unexptectedly moves after braking.

In an agricultural baler in accordance with embodiments of the present invention, if the first sensor data indicates presence of crop material in the baling chamber, the predefined stop position is a range of angular positions of the crank situated at an angular distance of between (10° + α) and (90° + α) in forward direction from the position of the crank where the plunger reaches its distal position, α being a downward tilting angle of the baling chamber with respect to a horizontal.

In an agricultural baler in accordance with embodiments of the present invention, if the first sensor data indicates absence of crop material in the baling chamber, a predefined stop position is a range of angular positions of the crank situated at an angular distance of between (260° + α) and (280° + α) in forward direction from the position of the crank where the plunger reaches its distal position, α being a downward tilting angle of the baling chamber with respect to a horizontal.

In an agricultural baler in accordance with embodiments of the present invention, the sensor system may furthermore comprise at least one sensor for providing second sensor data indicative of a fault condition on the baler, wherein, if the second sensor data indicates presence of a fault condition on the baler, a predefined stop position is such that the fault condition can be solved.

In an agricultural baler in accordance with embodiments of the present invention, the at least one sensor for providing first sensor data indicative of presence of crop material in the baling chamber may comprise at least one load cell.

In a second aspect, the present invention provides a method for stopping a crank of an agricultural baler in a predefined stop position. The baler comprises
- a shaft for coupling with a power take-off, and a flywheel connected to the shaft;
- a plunger connected to the flywheel via a crank, the plunger being adapted for performing a reciprocal movement between a near position allowing crop material to be added in a baling chamber, and a distal position suitable for compressing crop material in the baling chamber;
- a brake system adapted for providing a brake force for decelerating the flywheel depending on a brake control signal;
- a sensor system comprising at least one sensor for providing first sensor data indicative of presence of crop material in the baling chamber; and
- a brake control system connected to the at least one sensor system for receiving the first sensor data, and connected to the brake system for providing the brake control signal, the brake control system comprising a control unit provided with an algorithm for determining the brake control signal for stopping the crank in a either one of a plurality of predefined stop positions depending on the received first sensor data.

The method comprises receiving the first sensor data; determining, based on the received first sensor data, in which one of a plurality of predefined stop positions the crank should be stopped; generating a suitable brake control signal, and applying the brake control signal to the brake control system so as to stop the crank in the determined predefined stop position.

In a third aspect, the present invention provides a computer program product that, when executed on a control unit, provides instructions for executing the method of embodiments of the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 is a schematic side view of an agricultural baler.
FIG. 2 is an enlarged view of part of the baler of FIG. 1, wherein the crank is in a stop position when the baling chamber 6 is empty.
FIG. 3 is an enlarged view of part of the baler of FIG. 1, wherein the crank is in a stop position when presence of crop material in the baling chamber 6 is detected.
FIG. 4 is a schematic drawing of an embodiment of a flywheel and brake disc assembly, as may be used in a baler in accordance with embodiments of the present invention, shown in side view.
FIG. 5 is a schematic drawing showing a tractor (right) and a baler (left), the baler comprising a brake controller for stopping the flywheel in a controlled position depending on presence of crop material in the baling chamber, in accordance with embodiments of the present invention.
FIG. 6 is an enlarged view of part of the baler of FIG. 1, wherein the crank is in a stop position for solving a fault condition on the baler.
FIG.7 shows a processing system including instructions to implement aspects of the methods in accordance with embodiments of the present invention.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to (agricultural) balers, reference is made to machines for forming bales from agricultural crop material, such as forming cuboid-shaped bales, also called rectangular bales, by any suitable means, e.g. plungers.

Where in embodiments of the present invention reference is made to "high density bales", bales having a density higher than about 100 kg/m3 , for example higher than 190 kg/m3 are meant.

Where in embodiments of the present invention reference is made to crop material, reference is made to any suitable type of biomass that can be harvested and packed in bales, such as for example hay, silage, straw or other.

Where in embodiments of the present invention reference is made to a pick-up unit, reference is made to assemblies which are adapted for picking up crop material, e.g. a windrow, from the ground and feeding it into a subsequent processing unit, e.g. a baling chamber, of an agricultural machine, for example an agricultural harvesting machine, such as a baler.

Where in embodiments of the present invention reference is made to "normal operation of the baler", the condition of the baler is meant wherein the flywheel is rotated in a direction for producing bales.

Where in embodiments of the present invention reference is made to "normal direction" or "forward direction" of the input shaft or the flywheel or the crank of the baler, the rotation direction of the flywheel during normal production of bales is referred to.

Where in embodiments of the present invention reference is made to "plunger impact on the crop material", the moment in time at which the reaction force exerted upon the plunger by the compressed crop material is above a certain threshold value, e.g. above 25 kN, is referred to.

Where in embodiments of the present invention reference is made to "the distal position of the plunger in the baling chamber", that position is meant where the plunger is furthest away from its point of attachment to the crankshaft.

Where in embodiments of the present invention reference is made to "the near position of the plunger in the baling chamber", that position is meant where the plunger is nearest to its point of attachment to the crankshaft.

Where in embodiments of the present invention reference is made to "disc brake", reference is made to a device for slowing or stopping the rotation of a wheel while it is in motion. In this application reference is made to the caliper-type of disc brakes, as well as the drum-type of disc brakes. The caliper-type of disc brake comprises a brake disc and a caliper, the brake caliper comprising two brake pads to be forced to the sides of the disc.

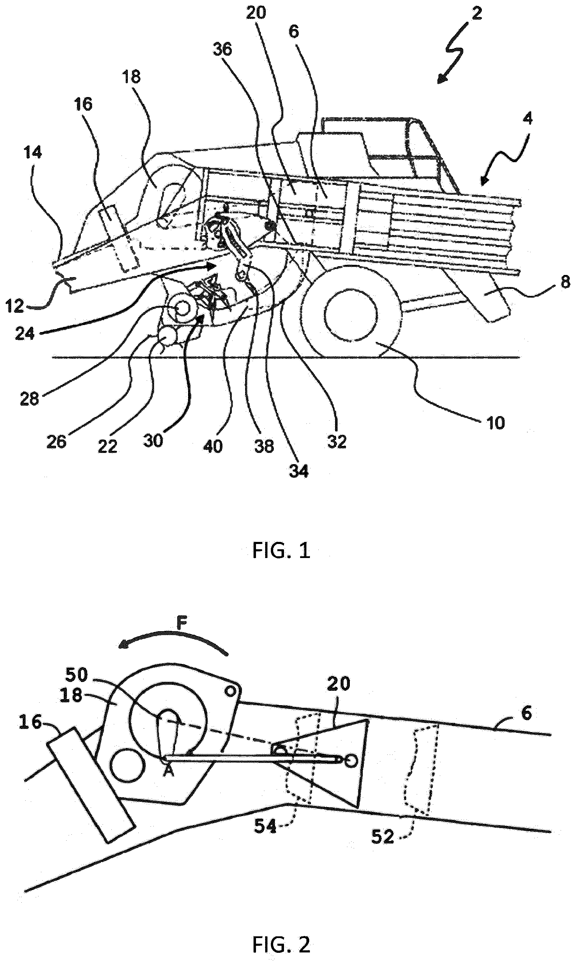

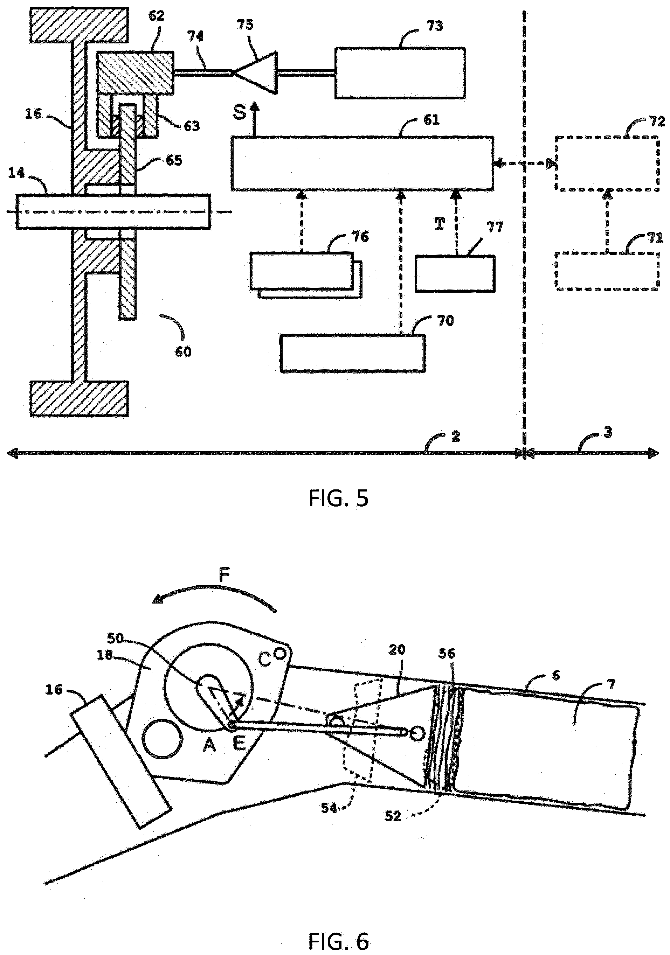

Agricultural balers, of the type that can be towed and powered via a tractor PTO are known in the art. Referring to the drawings, FIG.1 shows a side view of an example of an agricultural baler 2. The baler 2 comprises a bale case 4 extending in a fore-and-aft direction of the baler 2 and defining a baling chamber 6 , in which a bale 7 is to be formed. The bale case 4 is supported by a frame 8 of the baler 2 , which in turn is carried by ground-engaging wheels 10 . A forwardly extending tongue 12 is provided on the baler 2, provided at its front end with hitch means (not shown), to hitch the baler 2 to a towing vehicle (3 in FIG. 5), such as a tractor, for advancing the baler 2 across a field. Further, the baler 2 comprises a forwardly extending baler drive shaft 14 to be connected to a power take-off (PTO) of the towing vehicle in order to transfer power from the towing vehicle to the baler 2. In the baler 2, a flywheel 16 and a gearbox 18 are connected to the baler drive shaft 14 to transmit power to a plunger 20 of the baler 2 . The plunger 20 is configured to reciprocally move in the fore-and-aft direction of the baler 2 within the baling chamber 6 for periodically compacting crop material fed into the baling chamber 6.

The baler 2 further comprises a pick-up unit 22 for picking up windrowed crop material from the field as the baler 2 is travelled thereover, e.g. while being pulled by a tractor, and for delivering the crop material rearward towards a stuffer assembly 24 of the baler 2. The pick-up unit 22 may have a plurality of lifting tines 26 sweeping up crop material from the field. Augers 28 and/or a cut unit may be provided rearward of the pick-up unit 22 in a known manner. Moreover, a packer unit 30 may be positioned behind the pick-up unit 22 for feeding the crop material into a stuffer chute 32 of the stuffer assembly 24 . The packer unit 30 may be configured to collect and pre-compress the crop material within the stuffer chute 32 . The pick-up unit 22 thus delivers crop material into the front end of the rearwardly and upwardly curved, charge-forming stuffer chute 32.

Besides the stuffer chute 32, the stuffer assembly 24 comprises a stuffer 34 configured to transfer the charge of crop material collected within the stuffer chute 32 into the baling chamber 6. The stuffer chute 32 is thus connected to the baling chamber 6 by a feed opening 36 provided in a bottom wall of the baling chamber 6. The stuffer 34 comprises a plurality of stuffer tines 38 movable along a stuffer trajectory 40 indicated by dotted lines in FIG. 1. In the embodiment shown, the stuffer 34 only transfers the charge of crop material into the baling chamber 6 and the stuffer trajectory 40 thus only includes one long stroke of the plurality of tines 38 within the stuffer chute 32 . However, in order to eliminate the packer unit 30 , the stuffer 34 may also be operated to execute smaller strokes for collecting and pre-compressing the crop material within the stuffer chute 32 followed by a long stroke for transferring the charge of crop material into the baling chamber 6 .

The stuffer chute 32 may be equipped with means (not illustrated) for establishing whether a complete charge has been formed therein and for operating the stuffer 34 in response thereto. Each action of the stuffer 34 introduces a "charge" or "flake" of crop material from the stuffer chute 32 into the baling chamber 6.

A plunger 20 reciprocates in a fore-and-aft direction within the baling chamber 6, at least within a first part thereof. Biomass or crop material fed via the stuffer chute 32 is thereby compacted, e.g. compressed or otherwise treated, so as to form bales 7 in the above-described operation of the agricultural baler 2. Cuboid shaped bales, also known as "rectangular bales" are formed. The formed bales 7 may then be moved forward by the reciprocating motion of the plunger 20 to shift serially and incrementally along the baling chamber 6 towards a discharge outlet (not illustrated), wherefrom the bales 7 may eventually be ejected. The agricultural baler 2 may furthermore comprise components such as a knotter mechanism for automatically tying the completed bales 7 with e.g. twine or similar lineal object to make them self-supporting, for example for shipping and storage. Once tied, the bales 7 are discharged from the discharge outlet of the baling chamber 6 onto a discharge (not illustrated) in the form of a chute, for gently lowering the bales 7 near ground level.

Large agricultural balers 2, especially rectangular balers for producing high-density bales 7 have a flywheel 16 with a relatively large diameter and heavy weight and high inertial mass or energy equivalent. When all crop material of one field is compacted into bales 7, the functioning of the agricultural baler 2 is temporarily stopped, e.g. by decoupling or disabling the tractor PTO so that the flywheel 16 will slow down until it stops, and the related functions, such as the pick-up and/or packer mechanism are deactivated also. The agricultural baler 2 may then be brought to another field, usually while there is still some crop material left in the baling chamber 6. When arriving at the next field to be harvested, the agricultural baler 2 needs to be started up again, but it has been found, particularly with large balers having a large and heavy flywheel 16, that problems may arise due to the high inertia of the flywheel 16, when there is still crop material left in the baling chamber 16.

Such start-up problems occur when the flywheel 16 is not able to complete the first plunger impact on the crop material, i.e. when the plunger 20 stalls during the first compression cycle of the crop material in the baling chamber 6, shortly after start-up. An example of such a start-up position where this occurs is, as an example only, position A as illustrated in FIG. 2. In the example of FIG. 2, the crank 50 is located at an angular distance 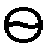 1 of approximately -90° with respect to the position the crank 50 would assume when the plunger 20 is in its distal position 52 inside the baling chamber 6. If position A is the initial condition of the crank 50 and plunger 20 just before the baler 2 is started, the crank 50 has to rotate only over about 90° before the plunger 20 reaches its distal position. When the agricultural baler 2 is started from this initial condition of the crank 50 and plunger 20, the flywheel 16 cannot gain sufficient speed before the plunger 20 impacts or reaches the crop material 56, e.g. straw or silage, in the baling chamber 6, and the tractor engine stalls or the safety mechanism declutches the PTO from the tractor engine, resulting in a start-up failure of the baler 2.

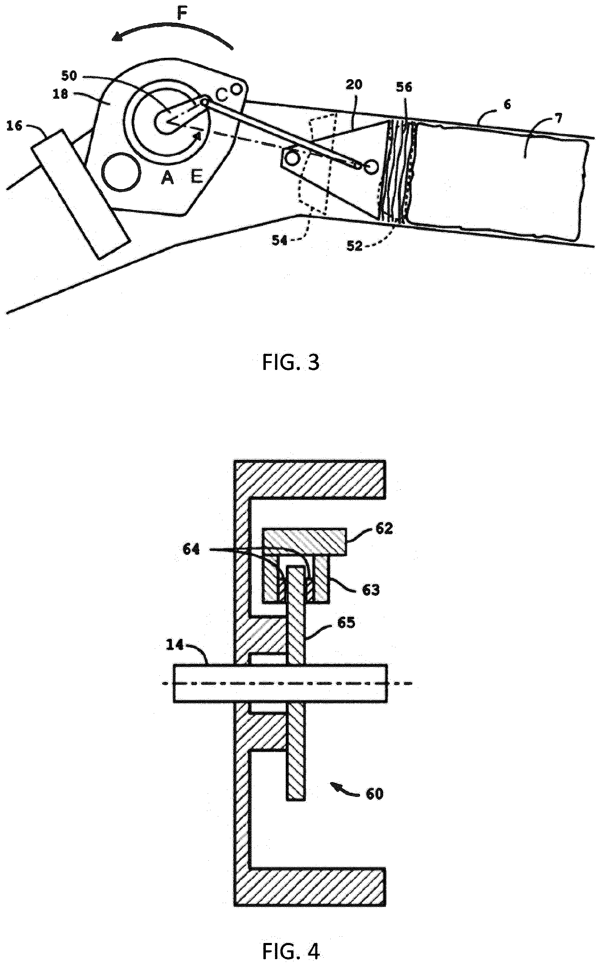

WO2014/128097 teaches how to start the agricultural baler 2 from a favorable crank position, in order to overcome the problems at start-up. A favorable crank position in this context is located between 10° and 90° in forward direction from the position of the crank where the plunger 20 reaches its distal position 52, as illustrated in FIG. 3. WO2014/128100, incorporated herein by reference, discloses how to stop the crank 50 of an agricultural baler 2 in such favorable crank position.

During tests, however, the inventors noted that, when switching off the agricultural baler 2, and stopping the crank 50 in a favourable crank position, e.g. position C in FIG. 3 as explained in WO2014/128100, the flywheel 16 and crank 50 tended to automatically rotate to an unfavorable condition, e.g. position A in FIG. 2, corresponding to an angle 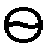 1 of about -90°, when no or insufficient crop material was present in the baling chamber 6, because of the gravity force acting on the heavy crank 50. Such movement of the crank 50 under gravity induces an unintentional movement of the plunger 20 in the baling chamber 6, which is not desired and could even be dangerous, as the movement of the crank 50 induces a movement of the plunger 20 in the baling chamber 6. Such unintentional, and hence unexpected, movement of the plunger 20 could be frightening and even dangerous for people potentially present in the baling chamber to inspect, service or repair the machine, for instance while being transported to another field.

In order to overcome this problem, in a first aspect of the present invention, an agricultural baler 2 as described above is provided, comprising a shaft 14 for coupling with a power take-off, and a flywheel 16 connected to the shaft 14. A plunger 20 is connected to the flywheel 16 via a crank 50. The plunger 20 is adapted for performing a reciprocal movement between a near position 54 allowing crop material to be added in a baling chamber 6, and a distal position 52 suitable for compressing crop material in the baling chamber 6. The principle of the present invention is to provide such baler 2 with braking means adapted for controlled braking of the movement of the crank 50 so as to stop the crank 50 in a predetermined position range, e.g. at a predefined position, which is dependent on the load on the plunger 20.

In order to stop the flywheel 16 and crank 50 in the predetermined position range, a brake system (e.g. a disc brake system 60, the invention, however, not being limited thereto) is added to the baler 2 for providing a brake force for decelerating and stopping the flywheel 16. A brake control system 61 is provided for generating a brake control signal S suitable for, when applied to the brake system, applying a suitable braking force to stop the crank 50 in the predetermined position range, e.g. at the predefined position. The disc brake system 60 may be activated in any known way, e.g. mechanically, hydraulically, pneumatically or electromagnetically.

A sensor system 77 e.g. a plunger force sensor, is provided, comprising at least one sensor for providing first sensor data T indicative of presence of crop material in the baling chamber 6. The brake control system 61 is connected to the at least one sensor system 77 for receiving the first sensor data T, and is connected to the brake system 60 for providing the brake control signal S. The brake control system 61 comprises a control unit provided with an algorithm for determining the brake control signal S for stopping the crank 50 in a either one of a plurality of predefined stop positions depending on the received sensor data T.

For determining the brake control signal S for stopping the crank 50 in either one of a plurality of predefined stop positions, depending on the received sensor data T, preferably a tilting angle of the baling chamber is taken into account. In an agricultural baler, the baling chamber is typically oriented at a 10° to 15° angle in a downward direction. This angle allows for the efficient compression of the material, and ensures that the bales are tightly packed. In the further description, this angle of the baling chamber is referred to as the angle α.

The control unit of the brake control system 61 may be programmed such that, if the first sensor data T indicate presence of crop material in the baling chamber 6, the predefined stop position is a range of angular positions of the crank 50 situated at an angular distance of between (10° + α) and (90° + α) in forward direction from the position of the crank 50 where the plunger 20 reaches its distal position 52. This is the situation in which the plunger 20 is loaded. The crank 50, subject to gravity forces, will try to move the plunger 20 in the baling chamber 6, but friction forces of the crop material present in the baling chamber 6 will prevent movement of the plunger 20 and hence movement of the crank 50. The crank 50 will remain in its stop position C, a favorable position for being restarted again.

The control unit may, furthermore or alternatively, be programmed such that if the first sensor data T indicate absence of crop material in the baling chamber 6, a predefined stop position is at an angular position such that the crank 50 stops in a substantially vertically downward position, i.e. the predefined stop position is in a range of angular positions of the crank situated at an angular distance of about (270° + α), e.g. between (260° + α) and (280° + α), in forward direction from the position of the crank 50 where the plunger 20 reaches its distal position. This corresponds to a situation where the plunger 20 is unloaded. The crank 50 is of course still subject to gravity forces. The connected plunger 20 not being blocked in its movement by crop material in the baling chamber 6 might move a bit, but these movements are limited in view of the small angular range over which the crank 50 can be stopped. The closer the crank 50 stops to a vertical position, the more limited the plunger movements due to gravity forces will be.

An example of a flywheel and disc brake arrangement is schematically illustrated in FIG. 4.

The disc brake system 60 shown in FIG. 4 is a caliper-type disc brake. It comprises a brake disc 65 and a caliper 62 comprising two disc claws 63, each claw having a brake pad 64 for contacting a side of the brake disc 65. Caliper-type disc brake systems 60 have the advantage that the braking can be better controlled, because the braking force is proportional to the pressure placed on the brake pad 64 by the braking system, e.g. by a brake servo. Disc brake systems 60 are well known in the art, and therefore need not be further described here. Also other kinds of disc brakes may be used, e.g. a drum-type disc brake. It is noted that FIG. 4 is only a schematic drawing. It is not drawn to the scale, but only illustrates principles of braking.

FIG. 5 is a schematic drawing of a baler 2 comprising the flywheel 16 and disc brake arrangement of FIG. 4, and a brake control system 61. A command for braking may be given by a local input device 70, or optionally by a remote input device 71 connected to a tractor controller 72, which is connectable to the brake control system 61. The brake caliper 62 in the example of FIG. 5 is a hydraulic caliper fluidly coupled to a hydraulic system 73 of the baler 2 via hydraulic lines 74 and a control valve 75. The brake caliper 62 may comprise two or more disc claws 63, also called 'pistons' or 'pots'. The braking force is adjustable via the control valve 75, which is controlled by the brake control system 61, which may be part of an integrated baler controller (not shown). The brake control system 61 may e.g. be an electronic controller adapted for activating or deactivating the brake caliper 62 with a predetermined braking force, which may be a constant or a variable force. Also connected to the brake control system 61 is at least one parameter sensor 76 for determining at least one parameter of the baler 2, such as e.g. angular velocity of the crank 50, the angular velocity of the flywheel 16, the angular position of the crank 50, the angular position of the flywheel 16, the position of the plunger 20, the speed of the plunger 20. The at least one sensor 76 may also be a proximity sensor, e.g. a magnetic or inductive sensor for sensing when the crank 50 or plunger 20 passes a predetermined position. This at least one parameter of the baler 2 is required for the brake control system 61 to calculate the required braking force and the required start time of braking. How to determine a suitable braking force and/or a suitable time for starting to brake such that the baler 2 comes to a stop in a predetermined position range has been described in WO2014/128100. This description does not need to be repeated here.

In accordance with the present invention, also connected to the brake control system 61 is a crop presence sensor system 77. The crop presence sensor system 77 comprises at least one sensor for providing first sensor data T indicative of the presence of crop material in the baling chamber 6. Various types of sensors can be used in the crop presence sensor system 77, such as optical sensors, pressure sensors, plunger force sensor or weight sensors. It is particularly advantageous to use force sensors or weight sensors, for instance [load cells][KH(i1].

Depending on the value of the first sensor data T (crop material present or not) the brake control system 61 may determine in which angular range the crank 50 should be stopped. If the first sensor data T indicates that crop material is present in the baling chamber, an algorithm running in the control unit of the brake control system will determine a brake control signal S, taking into account the sensed parameters of the baler 2, which, when applied to the brake system 61 will cause the crank 50 to stop in the range of angular positions between (10° + α) and (90° + α) in forward direction from the position of the crank where the plunger 20 reaches its distal position 52. If the first sensor data T indicates that no crop material is present in the baling chamber 6, hence the baling chamber 6 is empty, the algorithm running in the control unit of the brake control system 61 will determine a brake control signal S, taking into account the sensed parameters of the baler 2, which, when applied to the brake system 61 will cause the crank 50 to stop in a substantially vertically downward direction in the range of angular positions at about ([270° + α), e.g. between (260° + α ) and (280][KH(i2]° + α), in forward direction from the position of the crank where the plunger 20 reaches its distal position 52.

The stop positions may be hard coded, e.g. in the algorithm for determining the brake control signal S. For instance, if the first sensor data T indicates that crop material is present in the baling chamber 6, the crank 50 may be stopped at 35° in forward direction from the position of the crank 50 where the plunger 20 reaches its distal position 52, and if the first sensor data T indicates that no crop material is present in the baling chamber 6, the crank 50 may be stopped at 282° in forward direction from the position of the crank 50 where the plunger 20 reaches its distal position 52. Alternatively, different stop positions within the range of angular positions of the crank 50 situated at an angular distance of between (10° + α) and (90° + α) in forward direction from the position of the crank 50 where the plunger 20 reaches its distal position 52 may be taken on, depending on the actual value of the first sensor data T. For instance, if more crop material is present in the baling chamber 6, the stop position may be closer to (30° + α), while if less crop material is present, the stop position may be closer to ([90][BK(I3]° + α). The relationship between amount of crop material present, and a preferred actual stop position may be stored in a memory, for instance under the form of a look-up table, a decision tree or a mathematical formula. The memory may be part of, or external to but linked to the brake control system. The values for the look-up table may be stored in the memory during design or calibration phase.

An agricultural baler 2 in accordance with embodiments of the present invention, arranged to brake the movement of the flywheel 16 such that the crank 50 is stopped in either one of a plurality of stop positions depending on whether or not crop material is present in the baling chamber 6, may furthermore be provided for braking the movement of the flywheel 16 and stopping the crank 50 in yet another position. This may be the case when a fault condition occurs on the baler 2. In order to alleviate such problem, the sensor system 77 may comprise at least one fault condition sensor for providing second sensor data indicative of such fault condition. If the second sensor data indicates presence of such fault condition on the baler 2, a predefined stop position may be such that the fault condition can be solved. This will of course not be useful for any fault condition, but when an overload protection mechanism has been activated, for instance a stuffer shearbolt is broken and needs to be replaced, the brake control system 61 may receive second sensor date, e.g. an overload protection signal, from an overload protection sensor related to the overload protection mechanism, and may, based on that overload protection signal, brake the motion of the flywheel 16 and stop the crank 50 in a position suitable for replacing the overload protection mechanism. Such position may for instance be position E as illustrated in FIG. 6.

In a second aspect, the present invention provides a method for stopping a crank 50 of an agricultural baler 2 in a predefined stop position. The baler 2 is as described in accordance with embodiments of the first aspect of the present invention. The method comprises
(a) receiving the first sensor data T indicative of presence of crop material in the baling chamber 6,
(b) determining, based on the received first sensor data T, in which one of a plurality of predefined stop positions the crank 50 should be stopped,
(c) generating a suitable brake control signal S, and
(d) applying the brake control signal S to the brake system 60 so as to stop the crank 50 in the determined predefined stop position.

Generating the suitable brake control signal S includes determining a braking force and a braking starting time.

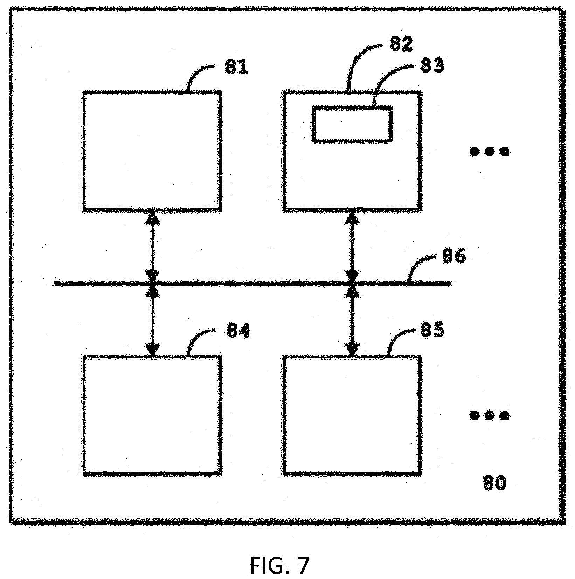

The above-described method embodiments of the present invention may be implemented in a control unit 80 such as shown in FIG. 7. FIG. 7 shows one configuration of control unit 80 that includes at least one programmable processor 81 coupled to a memory subsystem 82 that includes at least one form of memory, e.g., RAM, ROM, and so forth. It is to be noted that the processor 81 or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. The control unit 80 may include a storage subsystem 84 that has at least one input port (e.g. disk drive and/or CD- ROM drive and/or DVD drive). In some implementations, a display system, a keyboard, and a pointing device may be included as part of a user interface subsystem 85 to provide for a user to manually input information. Ports for outputting data also may be included. More elements such as network connections, interfaces to various devices, and so forth, may be included, but are not illustrated in FIG. 7. The various elements of the control unit 80 may be coupled in various ways, including via a bus subsystem 86, shown in FIG. 7 for simplicity as a single bus, but will be understood to those in the art to include a system of at least one bus. The memory of the memory subsystem 82 may at some time hold part or all (in either case shown as 83) of a set of instructions that when executed on the control unit 80 implement the steps of the method embodiments of the second aspect described herein. Thus, while a control unit 80 such as shown in FIG. 7 is prior art, a system that includes the instructions to implement aspects of the methods for stopping a crank 50 of an agricultural baler 2 in one of a plurality of predefined stop positions or stop position ranges depending on received sensor data T indicative of presence of crop material in the baling chamber 6 is not prior art, and therefore FIG. 7 is not labelled as prior art.

The present invention also includes a computer program or computer program product which provides the functionality of a method according to embodiments of the second aspect of the present invention when executed on a computing device. Such computer program product can be tangibly embodied in a carrier medium carrying machine-readable code for execution by a programmable processor. The present invention thus also relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non volatile media include, for example, optical or magnetic disks, such as a storage device which is part of mass storage. Common forms of computer readable media include, a CD-ROM, a DVD, a flexible disk or floppy disk, a memory key, a tape, a memory chip or cartridge or any other medium from which a computer can read. Various forms of computer readable media may be involved in carrying one or more sequences of one or more instructions to a processor for execution. The computer program or computer program product can be carried on an electrical carrier signal. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

For example, it is possible to operate the invention in an embodiment wherein the brake system 60 is different from the exemplary brake system described. Moreover, a baler 2 in accordance with embodiments of the present invention may be arranged for stopping the crank 50 in more than the two or three stop positions described. However, of all the possible stop positions, at least one stop position is defined for stopping the crank 50 if an empty baling chamber 6 is detected, and at least one other stop position is defined for stopping the crank 50 in case presence of crop material in the baling chamber 6 is determined.

## Claims

1. An agricultural baler (2) comprising:
- a shaft (14) for coupling with a power take-off, and a flywheel (16) connected to the shaft (14);
- a plunger (20) connected to the flywheel (16) via a crank (50), the plunger (20) being adapted for performing a reciprocal movement between a near position (54) allowing crop material to be added in a baling chamber (6), and a distal position (52) suitable for compressing crop material in the baling chamber (6);
- a brake system (60) adapted for providing a brake force for decelerating the flywheel (16) depending on a brake control signal (S);
wherein the baler (2) further comprises
- a sensor system (77) comprising at least one sensor for providing first sensor data (T) indicative of presence of crop material in the baling chamber (6); and
- a brake control system (61) connected to the at least one sensor system (77) for receiving the first sensor data (T), and connected to the brake system (60) for providing the brake control signal (S), the brake control system (61) comprising a control unit (80) provided with an algorithm for determining the brake control signal (S) for stopping the crank (50) in a either one of a plurality of predefined stop positions depending on the received first sensor data (T).

2. The agricultural baler (2) in accordance with claim 1, wherein, if the first sensor data (T) indicates presence of crop material in the baling chamber (6), the predefined stop position is a range of angular positions of the crank (50) situated at an angular distance of between 10° + α and 90° + α in forward direction from the position of the crank (50) where the plunger (20) reaches its distal position (52), α being a downward tilting angle of the baling chamber (6) with respect to a horizontal.

3. The agricultural baler (2) in accordance with any of the previous claims, wherein, if the first sensor data (T) indicates absence of crop material in the baling chamber (6), a predefined stop position is a range of angular positions of the crank (50) situated at an angular distance of between 260° + α and 280° + α in forward direction from the position of the crank (50) where the plunger (20) reaches its distal position (52), α being a downward tilting angle of the baling chamber (6) with respect to a horizontal.

4. The agricultural baler (2) in accordance with any of the previous claims, wherein the sensor system (77) furthermore comprises at least one sensor for providing second sensor data indicative of a fault condition on the baler (2), wherein, if the second sensor data indicates presence of a fault condition on the baler (2), a predefined stop position is such that the fault condition can be solved.

5. The agricultural baler (2) in accordance with any of the previous claims, wherein the at least one sensor for providing first sensor data (T) indicative of presence of crop material in the baling chamber (6) comprises at least one load cell.

6. A method for stopping a crank (50) of an agricultural baler (2) in a predefined stop position, the baler (2) comprising
- a shaft (14) for coupling with a power take-off, and a flywheel (16) connected to the shaft (14);
- a plunger (20) connected to the flywheel (16) via a crank (50), the plunger (20) being adapted for performing a reciprocal movement between a near position (54) allowing crop material to be added in a baling chamber (6), and a distal position (52) suitable for compressing crop material in the baling chamber (6);
- a brake system (60) adapted for providing a brake force for decelerating the flywheel (16) depending on a brake control signal (S);
- a sensor system (77) comprising at least one sensor for providing first sensor data (T) indicative of presence of crop material in the baling chamber (6); and
- a brake control system (61) connected to the at least one sensor system (77) for receiving the first sensor data (T), and connected to the brake system (60) for providing the brake control signal (S), the brake control system (61) comprising a control unit (80) provided with an algorithm for determining the brake control signal (S) for stopping the crank (50) in a either one of a plurality of predefined stop positions depending on the received first sensor data (T);
the method comprising
(a) receiving the first sensor data (T),
(b) determining, based on the received first sensor data (T), in which one of a plurality of predefined stop positions the crank (50) should be stopped,
(c) generating a suitable brake control signal (S), and
(d) applying the brake control signal (S) to the brake control system (61) so as to stop the crank (50) in the determined predefined stop position.

7. A computer program product that, when executed on a control unit, provides instructions for executing the method of claim 6.
